**Europäisches Patentamt**

**European Patent Office**

**Office européen des brevets**

(11) Veröffentlichungsnummer: **0 241 676 B1**

# EUROPÄISCHE PATENTSCHRIFT

(45) Veröffentlichungstag der Patentschrift: **18.09.91**

(51) Int. Cl.⁵: **G01N 27/04**, G08B 19/02

(21) Anmeldenummer: **87102470.9**

(22) Anmeldetag: **21.02.87**

(54) **Einrichtung zur Erfassung von Fahrbahnzustandsdaten.**

(30) Priorität: **16.04.86 DE 8610304 U**

(43) Veröffentlichungstag der Anmeldung:
**21.10.87 Patentblatt 87/43**

(45) Bekanntmachung des Hinweises auf die
Patenterteilung:
**18.09.91 Patentblatt 91/38**

(84) Benannte Vertragsstaaten:
**AT BE CH DE FR GB LI NL SE**

(56) Entgegenhaltungen:
**DE-B- 2 818 055**
**US-A- 3 596 264**
**US-A- 3 873 927**

(73) Patentinhaber: **ANT Nachrichtentechnik GmbH**
**Gerberstrasse 33**
**W-7150 Backnang(DE)**

(72) Erfinder: **Möller, Erhard, Prof. Dr.**
**Königsberger Strasse 70**
**W-5100 Aachen(DE)**
Erfinder: **Bernstein, Lutz, Dipl.-Ing.**
**Liebermannweg 8b**
**W-5132 Übach-Palenberg(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Einrichtung zur Erfassung von Fahrbahnzustandsdaten. Solche Daten werden benötigt, um vor Glatteis sicher warnen zu können.

Aus der US-A-38 73 927 ist eine Meßeinrichtung zur Erfassung von Feuchtigkeit und Eis auf Fahrbahnen mittels Elektroden bekannt. Dabei kann auch die Anwesenheit von Salz bzw. dessen Konzentration ermittelt werden.

Aus der DE-OS 21 37 689 ist ein Verfahren und eine Einrichtung bekannt zur Feststellung von Glatteisbildung auf Straßen, die sich dadurch auszeichnet, daß unabhängig von-einander der Leitwert der Straßendecke gemessen und die Spiegelung der Straßendecke geprüft wird und daß bei Auftreten einer Spiegelung und einem vorgegebenen Leitwert von einem Drittel des Leitwertes bei normaler Straßenfeuchte ein Warngerät eingeschaltet wird.

Es hat sich gezeigt, daß die Messung des Leitwertes der Straßendecke allein nur ungenügenden Aufschluß über den Fahrbahnzustand gibt, während die Feststellung der Spiegelung der Straßendecke zwar technisch aufwendig, aber beispielsweise bei Temperaturen über dem Gefrierpunkt nicht unbedingt erforderlich ist.

Es ist Aufgabe der Erfindung, eine Einrichtung anzugeben, die mehr Aufschluß über Fahrbahnzustände vermittelt, als nur eine einfache Messung des Oberflächenleitwertes.

Diese Aufgabe wird gelöst durch die Einrichtung mit den Merkmalen des Patentanspruches 1. Vorteilhafte Weiterbildungen sind in den Unteransprüchen angegeben.

Es sind also entsprechend der Erfindung nicht nur Elektroden zur Messung der elektrischen Oberflächenleitfähigkeit vorgesehen, sondern - ganz allgemein ausgedrückt - zusätzliche Mittel zur Erfassung von mindestens einem der zusätzlichen Kriterien
- des Bedeckungsgrades der Fahrbahn durch Feuchtigkeit oder durch Eis,
- des Wasserpegels oder der Eisdicke.

Die Mittel zur Erfassung der elektrischen Oberflächenleitfähigkeit dienen dazu, einen Prozessor zu steuern, der aus den erfaßten Kriterien Daten ableitet, die zur Warnung und/der Steuerung (z.B von Verkehrszeichen) verwendet werden können. Dabei muß der Prozessor die Temperaturabhängigkeit der Oberflächenleitfähigkeit bei Feuchte bzw. Vereisung berücksichtigen.

Als Mittel zur Erfassung des Bedeckungsgrades können mehrere Elektroden im Abstand voneinander in einer Ebene auf der Oberseite des Deckels (nach Einbau also im Fahrbahnniveau) vorgesehen und elektrisch mit Meßmitteln verbunden sein zur Ermittlung der Anzahl von Elektroden, über welche ein eis-oder feuchtigkeitsbedingter Strom fließt.

Als Mittel zur Erfassung des Wasserpegels bzw. der Eisdicke auf der Fahrbahn können mehrere Elektroden im Abstand von-einander in einer Erhebung auf dem Deckel (nach Einbau also in einer Fahrbahnerhebung) auf unterschiedlichem Niveau vorgesehen und elektrisch mit Meßmitteln verbunden sein zur Ermittlung des Niveaus, bis zu welchem ein eis- oder feuchtigkeitsbedingter Strom über Elektroden fließt, die in oder unterhalb dieses Niveaus liegen.

Die Realisierung der Mittel zur Erfassung von Bedeckungsgrad und Wasserpegel durch Elektroden führt zu einer Anordnung, die sich einfach herstellen und installieren läßt.

Zusätzlich können als Mittel zur Erfassung von Salz wenigstens zwei Elektroden in einer Senke in der Oberseite des Deckels (nach Einbau also in einer Fahrbahnsenke) vorgesehen sein, die mit Meßmitteln zur Ermittlung eines salzbedingten elektrischen Stromes verbunden sind.

Bevorzugt weist die Oberseite des Deckels des Kastens eine Mulde auf, in welcher sich eines oder mehrere der genannten Mittel eingegossen in einer elektrisch isolierenden Vergußmasse befinden. Die Vergußmasse, die bis zum Rand der Mulde reicht, weist bevorzugt thermische Eigenschaften auf, die den thermischen Eigenschaften üblicher Fahrbahnen angepaßt sind, und einige wenige Millimeter unter der Oberfläche der Vergußmasse kann ein Temperaturfühler eingegossen sein.

Bevorzugt befinden sich in dem Kasten elektrische Steckoder Klemmverbindungen zu den der Erfassung dienenden Mitteln.

Bevorzugt wird der Kasten als kompaktes, quaderförmiges Gußgehäuse ausgebildet, in dessen Deckel die Mittel zur Erfassung des Fahrbahnzustandes - im folgenden Sensoren genannt - untergebracht sind. Die erfaßten Straßenzustandsdaten können dazu dienen, im Rahmen eines Glättefrühmelde-Systems den aktuellen Straßenzustand zu erfassen, eine erwartete Glättebildung zu prognostizieren und anzuzeigen.

Anhand der Zeichnungen wird auf ein bevorzugtes Ausführungsbeispiel näher eingegangen.
Figur 1 zeigt eine perspektivische Ansicht der Einrichtung,
Figur 2 ein Schaltbild für einen Teil der Sensoren und
Figur 3 ein weiteres Schaltbild für andere Sensoren.

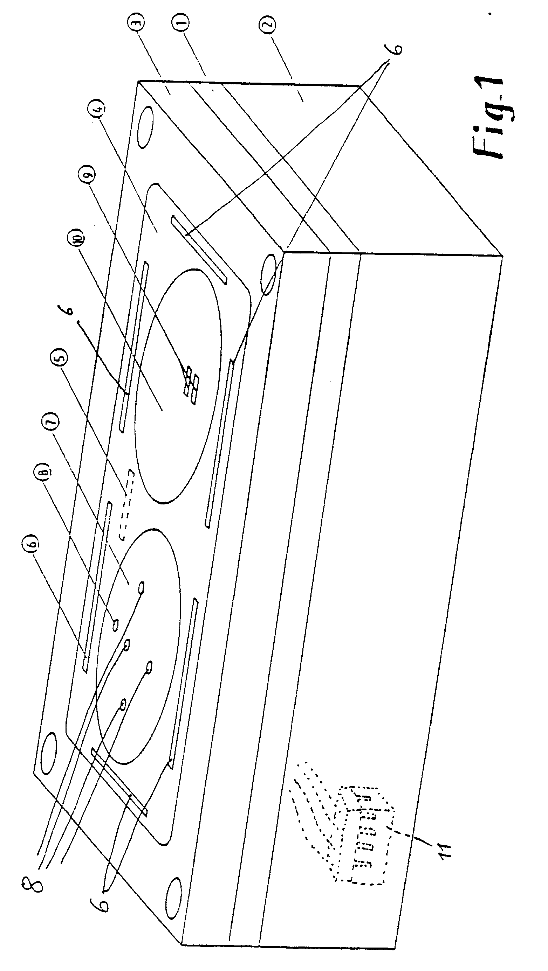

Der in Figur 1 gezeigte Kasten wird so in die Fahrbahndecke eingelassen, daß die Fahrbahnoberfläche und die Deckeloberfläche ineinander übergehen.

Auf einem Metallgehäuse 2 befindet sich ein Deckel mit einem Deckelunterteil 1 und einem darauf montierten Edelstahlrahmen 3, der zusammen mit dem Deckelunterteil 1 eine Mulde 4 bildet, die mit einer Verußmasse ausgegossen ist. Diese Verußmasse weist bevorzugt folgende Eigenschaften auf:

```
- hohe Abriebfestigkeit               ⎫ wegen mechanischer
- Widerstandsfähigkeit gegen          ⎬ Beanspruchungen in
  hohe Druckbelastungen               ⎭ der Fahrbahn
- Benzin-, Öl- und Laugenbeständigkeit⎫ wegen chem. Bean-
- geringe Wasseraufnahmefähigkeit     ⎬ spruchungen
- Resistenz gegen UV-Bestrahlung
- geringe Schrumpfrate
- geringe Versprödung                 ⎫ zur Sicherung kon-
- geringe Temperaturempfindlichkeit   ⎬ stanter elektr. Ei-
- kleiner dielektrischer Verlustwinkel⎭ genschaften
```

Die Sensoren zur Erfassung der Straßenzustandsdaten sind in der Verußmasse eingegossen.

Ein Temperaturfühler 5 (beispielsweise ein PT-100-Element) ist etwa 4 mm unter der Oberfläche der Verußmasse eingegossen. Durch die hier gewählte Art des Eingießens und durch die Wahl einer Verußmasse mit den oben angegebenen Eigenschaften ist es möglich, den Temperaturfühler nur wenige Millimeter unter der Oberfläche anzuordnen. Beim direkten Einbau eines Temperaturfühlers in eine Straßendecke ist eine so geringe Tiefe unter der Fahrbahnoberfläche nicht erreichbar.

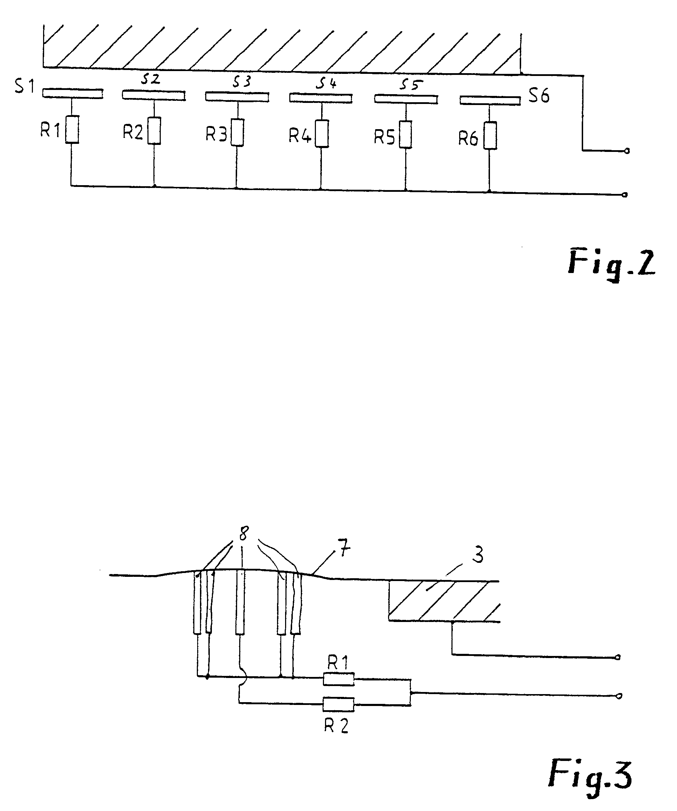

In geringen Abständen von dem Edelstahlrahmen 3 sind in die Verußmasse stegförmige Elektroden 6 eingegossen, deren schmale Seiten plan in der Oberfläche der Verußmasse offenliegen, so daß sie beim Einsetzen der gezeigten Einrichtung in eine Fahrbahn im Fahrbahnniveau liegen. Bei Auftreten von Feuchtigkeit oder Eis tritt elektrische Leitfähigkeit zwischen der offenliegenden Seite einer Elektrode 6 und dem Edelstahlrahmen 3 auf. Sechs solche Elektroden S1 bis S6 sind über ein in Figur 2 dargestelltes elektrisches Netzwerk mit Widerständen R1 bis R6 zusammengeschaltet. Durch die Messung des gesamten Leitwertes bzw. Widerstandes ist es möglich, anzugeben, an wievielen der sechs Sensoren sich elektrische Leitfähigkeit eingestellt hat. Dadurch ist es möglich, eine Aussage über den Bedeckungsgrad der aufgetretenen Feuchtigkeit zu machen. Tritt nur an einem der Sensoren elektrische Leitfähigkeit auf, so bildet sich auf der Fahrbahn punktuelle Feuchte; zeigen dagegen alle sechs Sensoren elektrische Leitfähigkeit an, so hat sich auf der Fahrbahn flächendeckende Feuchte mit hohem Bedeckungsgrad eingestellt. Die Möglichkeit punktuelle und flächendeckende Feuchte voneinander zu unterscheiden, ist ein Vorteil der gezeigten Einrichtung.

Das Prinzip der Bedeckungsgradmessung ist ausdehnbar auf größere Flächen, wenn man mehrere der gezeigten Einrichtungen oder mehrere der Sensoren 6 bzw. S1 bis S6 über eine größere Oberfläche in einer Fahrbahn oder auch in einer anderen interessierenden Oberfläche verteilt.

Neben der Kenntnis des Bedeckungsgrades der Feuchte ist es von Interesse, wenn die Feuchte oder das Eis in einen Wasserfilm bzw. eine Eisschicht übergeht, die Dicke dieses Filmes bzw. der Schicht zu kennen. In einer aus der Verußmasse gebildeten Erhebung oder Kuppe 7 sind daher 5 stiftförmige Elektroden 8 angeordnet, wobei eine Elektrode in der Achse der Kuppe 7 und vier auf einem konzentrischen Zylinder um die Kuppenachse positioniert sind. Die Stirnflächen der stiftförmigen Elektroden 8 liegen offen auf dem Zenit der Kuppe bzw. an vier Stellen auf halber Kuppenhöhe.

Wie in Figur 3 gezeigt, sind die fünf stiftförmigen Elektroden 8 über ein Widerstandsnetzwerk R1, R2 mit dem Edelstahlrahmen 3 zusammengeschaltet. Stellt ein Wasserfilm oder eine Eisschicht elektrische Leitfähigkeit zwischen dem Edelstahlrahmen 3 und den vier Elektroden auf halber Kuppenhöhe her, so ergibt sich ein anderer Gesamtwiderstand, als wenn ein Wasserfilm bzw. eine Eisschicht elektrische Leitfähigkeit zwischen dem Edelstahlrahmen 3 und der Elektrode 8 im Kuppenzenit herstellt. Dadurch ist es möglich, zwischen unterschiedlich dicken Wasserfilmen bzw. Eisschichten zu unterscheiden. Bisher einge-

EP 0 241 676 B1

setzte Sensoren können diese Informationen nicht geben.

In der tiefsten Stelle einer Senke 10 in der Vergußmasse befindet sich in Figur 1 ein Elektrodenpaar 9 als Salzrestsensor. Zur Bestimmung von Salzresten auf der Fahrbahnoberfläche werden wässerige Salzlösungen herangezogen, die sich aus Salzresten und Feuchte oder Nässe auf der Fahrbahn ergeben.

Der Vorteil des Elektrodenpaares 9 in der Senke 10 besteht darin, daß schon geringe Feuchtebildungen zu einer zuverlässigen Anzeige führen. Dies wird dadurch erreicht, daß der Salzrestsensor, dessen Wirkung auf der Messung des elektrischen Leitwertes zwischen zwei Elektroden beruht, in der flachen, die Feuchtigkeit sammelnden Senke liegt und daß durch die kleinen Abmessungen dieser Senke schon bei geringen Feuchtigkeitsmengen eine vom Volumen der gesammelten Feuchtigkeit unabhängige Leitfähigkeit auftritt, weil zusätzliches Flüssigkeitsvolumen das Strömungsfeld zwischen den Elektroden des Elektrodenpaares 9 nicht mehr wesentlich erweitert. Es ist hier ein günstiger Formfaktor für das Auftreten der Strömungsfelder gewählt.

Die Mulde ist andererseits so flach gewählt, daß sie sich durch die üblichen Witterungseinflüsse wie Wind und Regen säubert und dadurch den gerade aktuellen Salzrest auf der Fahrbahn anzeigt.

Durch die engräumige Zusammenfassung von vier verschiedenen Sensorarten ist es möglich, eine Kleinklima engräumig auf der Fahrbahn zu erfassen. Dies ist notwendig, weil sich die Straßenzustandsdaten schon in kleinen Bereichen der Fahrbahn z.B. durch Rollspuren stark unterschiedlich darstellen.

Durch die engräumige Zusammenfassung der vier Sensorarten ergibt sich ein geringerer Aufwand für die Leitungszuführungen als bei dislozierter Anordnung der einzelnen Sensoraten. Die Integration der Sensoren in der Vergußmasse auf dem Gehäusedeckel macht es möglich, ohne große Arbeiten an der Fahrbahn nur durch Austauschen des Gehäusedeckels die Sensorik auszutauschen. Die Anordnung auf dem Gehäusedeckel erweist sich insofern als vorteilhaft, als im darunterliegenden Gehäuse Steck- und Klemmvorrichtungen angeordnet werden können, so daß sich eine steckbare Kompakt-Sensorik ergibt.

Ein weiterer Vorteil, der sich aus der Konstruktion und aus dem Betrieb der Sensorik ergibt, besteht darin, daß der Betrieb der Sensorik außerordentlich geringe elektrische Leistung erfordert. Dadurch ist die Sensorik unabhänig vom elektrischen Energieversorgungsnetz und kann mit geringen Leistungen, die Nachrichten- oder Datenübertragungsnetzen entnommen werden können, betrieben werden.

**Patentansprüche**

1. Einrichtung zur Erfassung von Fahrbahnzustandsdaten mit Elektroden (6,8,9) zur Messung der elektrischen Oberflächenleitfähigkeit, dadurch gekennzeichnet, daß Mittel vorgesehen sind zur Erfassung von mindestens einem der zusätzlichen Kriterien
   a) des Bedeckungsgrades der Fahrbahn durch Feuchtigkeit oder durch Eis, indem mehrere Elektroden (6) im Abstand voneinander im Fahrbahnniveau vorgesehen und elektrisch mit Meßmitteln (R1 bis R6) verbunden sind zur Ermittlung der Anzahl von Elektroden, über welche ein eis- oder feuchtigkeitsbedingter Strom fließt,
   b) des Wasserpegels oder der Eisdicke, indem mehrere Elektroden (8) im Abstand voneinander in einer Fahrbahnerhebung (7) auf unterschiedlichem Niveau vorgesehen und elektrisch mit Meßmitteln (R1', R2') verbunden sind zur Ermittlung des Niveaus, bis zu welchem ein eis- oder feuchtigkeitsbedingter Strom über Elektroden fließt, die in oder unterhalb dieses Niveaus liegen.

2. Einrichtung nach Anspruch 1, dadurch gekennzeichnet, daß die Mittel auf der Oberseite des Deckels (1,3) eines Kastens vorgesehen sind, der in einer Fahrbahn so versenkbar ist, daß sich die Oberseite des Deckels auf Fahrbahnniveau befindet.

3. Einrichtung nach einem der Ansprüche 1 oder 2, dadurch gekennzeichnet, daß die Oberseite des Deckels (1,3) eine Mulde (4) aufweist, in welcher sich die Mittel (6,8,9) eingegossen in einer die Mulde (4) ausfüllenden, elektrisch isolierenden Vergußmassen befinden.

4. Einrichtung nach Einspruch 3, dadurch gekennzeichnet, daß die Vergußmasse üblichen Fahrbahnen angepaßte thermische Eigenschaften aufweist und einen wenige Millimeter unter der Oberfläche eingegossenen Temperaturfühler (5) aufweist.

5. Einrichtung nach einem der Ansprüche 1 bis 4, dadurch gekennzeichnet, daß der Kasten elektrische Steck- oder Klemmverbindungen (11) zu den der Erfassung dienenden Mitteln (5,6,8,9) aufweist.

**Claims**

4

1. Equipment for the detection of road lane state data with electrodes (6, 8, 9) for the measurement of the electrical surface conductivity, characterised thereby, that means are provided for the detection of at least one of the additional criteria

   a) of the degree of coverage of the road lane by moisture or by ice in that several electrodes (6) are arranged at a spacing one from the other at the road lane surface level and electrically connected with measuring means (R1 to R6) for the determination of the number of electrodes, by way of which a current caused by ice or moisture is flowing,

   b) of the water level or of the ice thickness in that several electrodes (8) are provided at a spacing one from the other at different levels in a road lane protrusion and electrically connected with measuring means (R1' to R2) for determination of the level, up to which a current caused by ice or moisture is flowing by way of electrodes which lie above or below this level.

2. Equipment according to claim 1, characterised thereby, that the means are provided on the upper side of the cover (1, 3) of a box which is so recessable in a road lane that the upper side of the cover is situated at the road lane surface level.

3. Equipment according to one of the claims 1 and 2, characterised thereby, that the upper side of the cover (1, 3) displays a trough (4), in which the means (6, 8, 9) are disposed, having been encapsulated in an electrically insulating sealing compound filling out the trough (4).

4. Equipment according to claim 3, characterised thereby, that the sealing compound displays thermal properties adapted to usual road lanes and displays a temperature sensor (5) cast in a few millimetres below the surface.

5. Equipment according to one of the claims 1 to 4, characterised thereby, that the box displays electrical plug or clamp connections (11) to the means (5, 6, 8, 9) serving for detection.

**Revendications**

1. Dispositif de saisie des données relatives à l'état de la chaussée, comportant des électrodes (6,8,9) pour la mesure de la conductibilité électrique de surface, caractérisé par le fait que des moyens sont prévus pour saisir au moins l'un des critères complémentaires.

   a) le taux de couverture de la chaussée par l'humidité ou par le verglas, en ce sens que plusieurs électrodes (6) sont prévues au nivau de la chaussée, à certaine distance l'une de l'autre, et sont réunies électriquement avec des moyens de mesure (51 à R6) pour déterminer le nombre d'électrodes par lesquelles passe un courant provoqué par le verglas ou par l'humidité.

   b) le niveau de l'eau ou l'épaisseur du verglas, en ce sens que plusieurs électrodes (8) sont prévues, à une certaine distance l'une de l'autre et à un niveau différent, sur une éminence (7) de la chaussée et sont réunies électriquement avec des moyens de mesure (R1', R2') pour déterminer le niveau jusqu'auquel passe, par les électrodes qui se situent à ce niveau ou en-dessous de ce niveau, un courant provoqué par le verglas ou par l'humidité.

2. Dispositif selon la revendication 1, caractérisé par le fait que les moyens sont prévus sur la surface supérieure du couvercle (1,3) d'une caisse que l'on peut enfoncer dans une chaussée de façon que la face supérieure du couvercle se trouve au niveau de la chaussée.

3. Dispositif selon l'une des revendications 1 ou 2, caractérisé par le fait que la face supérieure du couvercle (1,3) présente une cuvette (4) dans laquelle se trouvent les moyens (6,8,9) noyés dans une masse coulée, électriquement isolante, qui remplit la cuvette (4).

4. Dispositif selon la revendication 3, caractérisé par le fait que la masse coulée présente des caractéristiques thermiques adaptées aux chaussées habituelles et présente un détecteur de température (5) noyé quelques millimètres en-dessous de la face supérieure.

5. Dispositif selon l'une des revendications 1 à 5, caractérisé par la fait que la caisse présente des liaisons électriques (11), par enfichage ou par serrage, avec les moyens (5,6,8,9) servant à la saisie.

Fig.1

EP 0 241 676 B1

S1   S2   S3   S4   S5   S6

R1   R2   R3   R4   R5   R6

**Fig.2**

8   7   3

R1

R2

**Fig.3**